# DEMANDE DE BREVET EUROPEEN

(11) **EP 2 336 579 A1**
(43) Date de publication de la demande: **22.06.2011**
(21) Numéro de dépôt: 10354090.2
(22) Date de dépôt: 14.12.2010
(51) Int. Cl.: F16B 37/06

(54) **Insert à filetage intérieur pour montage en aveugle en extrémité de tube et procédé de montage en aveugle**

(30) Priorité: 15.12.2009 FR 0906064
(71) Demandeur: Bollhoff Otalu S.A., 73490 La Ravoire (FR)
(72) Inventeur: Gomes, Isabel, 74000 Annecy (FR); Bovagnet, Frédéric, 73470 Novalaise (FR); Gory, Philippe, 73160 Saint Thibaud de Couz (FR)
(74) Mandataire: Gris, Sébastien

(57) **Abrégé**

Un insert à filetage intérieur (10) pour montage en aveugle en extrémité de tube (17) comporte un pied équipé intérieurement d'un premier taraudage axial, une tête agencée coaxialement avec le taraudage et le pied, délimitant intérieurement un alésage de passage, et un fût de raccordement intercalé entre le pied et la tête. Le fût est doté d'une surface extérieure ayant une section avec un profil anti-rotation, et d'une zone de plus grande déformabilité configurée pour se déformer sous un effort axial prédéterminé de traction appliqué au pied par rapport à la tête et générer un bourrelet de sertissage (19) ayant des dimensions extérieures supérieures au diamètre interne du tube (17) dans la zone de montage. La zone de plus grande déformabilité comporte un bourrelet intermédiaire (24) ayant des dimensions extérieures inférieures à celle du pied (11).

## Description

### Domaine technique de l'invention

L'invention est relative à un insert à filetage intérieur pour montage en aveugle en extrémité d'un tube.

L'invention concerne également un procédé de montage en aveugle d'un tel insert en extrémité de tube.

### État de la technique

Dans de nombreux domaines de l'industrie, par exemple le domaine automobile, il est souvent nécessaire de fixer de manière démontable un élément fileté tel qu'une vis à l'extrémité d'un tube cylindrique ou polygonal. L'épaisseur de la paroi du tube étant généralement trop faible pour réaliser un alésage taraudé, un insert à filetage intérieur est rapporté dans une zone de montage ménagée en extrémité du tube. Cette solution convient également lorsque le diamètre intérieur du tube est trop important pour réaliser un taraudage fonctionnel désiré.

Pour monter un insert de ce type en extrémité d'un tube, une première technique connue consiste à souder un écrou de forme complémentaire du tube. Afin de permettre une soudure correcte, la nuance de matière de l'écrou doit être compatible avec celle du tube.

Il en résulte un risque inacceptable de déformation du tube, et l'impossibilité de mise en oeuvre sur des tubes finis, c'est-à-dire recouvert d'une protection de type traitement de surface, peinture ou gaine.

Une deuxième technique est décrite dans le document EP1873406A1, qui divulgue un écrou à sertir en aveugle équipé d'un noyau et d'une douille reliés entre eux par une zone sécable. Après rupture de cette zone, le noyau conique vient s'insérer dans la douille, créant une déformation extérieure de la douille et un blocage de celle-ci par rapport à la pièce dans laquelle elle est montée. Au voisinage de son extrémité distale, la douille est pourvue d'un bourrelet périphérique de diamètre extérieur égal ou peu inférieur au diamètre du trou de la pièce dans laquelle elle est montée.

Mais cette solution n'est pas totalement satisfaisante. D'une part, la tenue à la poussée axiale de l'écrou à sertir est limitée aux frottements mécaniques entre les différents éléments. D'autre part, la surface de contact entre la douille et le tube est limitée. Enfin, dans le cas de tubes soudés, le cordon de soudure interne au tube oblige à une réduction de diamètre de la douille, limitant en conséquence la résistance de l'écrou serti au basculement (bras de levier dû à la flexion de l'élément fileté en prise dans l'écrou) et augmentant le risque de désolidarisation et la perte du noyau (résistance au couple mécanique de serrage limitée).

Le document EP0691480 décrit un insert muni d'un fût comportant successivement le long de l'axe dudit insert une tête formant collerette, une zone de plus grande déformabilité, et un pied comportant un chanfrein.

### Objet de l'invention

Un objet de l'invention consiste à réaliser un insert permettant de répondre à l'ensemble des problèmes ci-dessus, en particulier augmentant la qualité et la fiabilité de la tenue et la flexibilité d'utilisation.

L'insert selon l'invention est remarquable en ce qu'il comporte :
- un pied équipé intérieurement d'un taraudage de direction axiale,
- une tête agencée coaxialement avec le taraudage et le pied, délimitant intérieurement un alésage de diamètre intérieur supérieur au diamètre du taraudage,
- et un fût de raccordement intercalé entre le pied et la tête, doté d'une surface extérieure ayant une section avec un profil anti-rotation, et ayant une zone de plus grande déformabilité configurée pour se déformer sous un effort axial prédéterminé de traction appliqué au pied par rapport à la tête en direction de la tête et générer un bourrelet de sertissage ayant des dimensions extérieures supérieures au diamètre interne du tube dans la zone de montage, ladite zone de plus grande déformabilité comportant un bourrelet intermédiaire ayant des dimensions extérieures inférieures à celle du pied.

L'installation est réalisée par sertissage en aveugle sans opération de soudure, donc sans reprise, et peut s'adapter à tout type de tube. Les dimensions du pied et de la tête peuvent être ajustées précisément au diamètre interne du tube dans la zone de montage, supprimant tout risque de basculement. La déformation nécessaire au montage est limitée à la seule zone de plus grande déformabilité, simplifiant la conception. Le bourrelet de sertissage d'un diamètre supérieur à celui du tube dans la zone de montage provoque une déformation locale et calibrée du tube, conférant une haute tenue mécanique axiale. La résistance est améliorée par les multiples surfaces d'accroche formées par le profil anti-rotation. Le calibrage de la déformation du tube peut permettre de répondre aux exigences esthétiques du tube pour certaines applications.

Selon un mode de réalisation préférentiel, la tête a une forme de cône convergeant en direction du pied depuis une base ayant des dimensions extérieures supérieures à celles du diamètre interne du tube dans la zone de montage. Il en résulte la formation d'un deuxième point d'ancrage au niveau de la tête après l'introduction axiale complète de l'insert dans le tube, même avant l'opération de sertissage, et la conicité facilite l'introduction de l'insert dans le tube jusqu'à un affleurement de la base du cône par rapport à l'extrémité du tube.

Un autre aspect de l'invention concerne un procédé de montage en aveugle d'un tel insert. Le procédé est remarquable en ce que ledit insert comportant un pied équipé intérieurement d'un premier taraudage axial, une tête agencée coaxialement avec le taraudage et le pied, délimitant intérieurement un alésage de diamètre intérieur supérieur au diamètre du taraudage, et un fût de raccordement intercalé entre le pied et la tête, il consiste à :
- déformer une zone de plus grande déformabilité du fût, générant un bourrelet intermédiaire ayant des dimensions extérieures inférieures à celle du pied,
- introduire successivement le pied, le fût et la tête au moins partiellement dans une zone de montage en extrémité de tube,
- appliquer un effort axial prédéterminé au pied par rapport à la tête pour continuer la déformation de la zone de plus grande déformabilité, générant un bourrelet de sertissage ayant des dimensions extérieures supérieures au diamètre interne du tube dans la zone de montage.

La création d'une pré-déformation de l'insert avant son montage proprement dit par sertissage permet de réduire l'effort nécessaire à l'ancrage de l'insert dans le tube.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent des premier et deuxième exemples d'insert fileté, en semi coupe axiale,
- les figures 3 à 5 illustrent les séquences successives de montage du premier exemple dans une zone de montage de l'extrémité de tube,
- la figure 6 représente un troisième exemple d'insert fileté selon l'invention, comprenant un bourrelet intermédiaire,
- les figures 7 et 8 montrent un quatrième exemple d'insert fileté selon l'invention, respectivement avant et après son montage dans une zone de montage de l'extrémité de tube.

### Description de modes préférentiels de l'invention

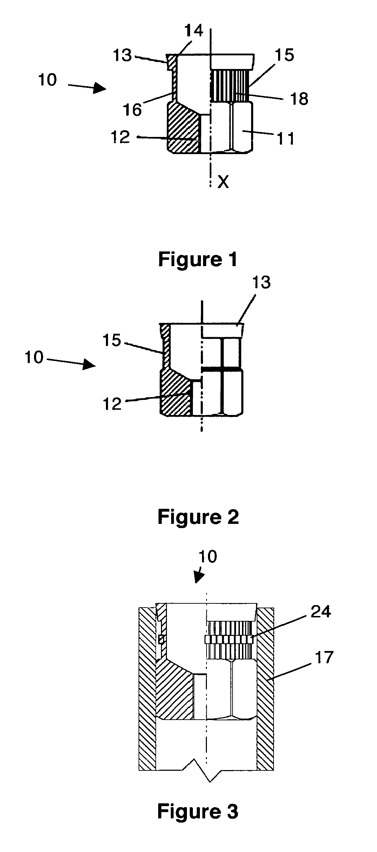

Les figures 1 et 2 illustrent des premier et deuxième exemples d'insert à filetage intérieur 10, destinés à un montage en aveugle en extrémité d'un tube 17 (voir figures 3 à 5). De tels inserts sont destinés à la fixation en extrémité de tube d'éléments filetés tels que des vis ou des boulons.

Chacun des inserts à filetage intérieur 10 comporte les éléments suivants, décalés dans une direction axiale X :
- un pied 11 équipé intérieurement d'un premier taraudage axial 12,
- une tête 13 agencée coaxialement avec le taraudage 12 lui-même coaxial au pied 11, délimitant intérieurement un alésage de passage 14,
- et un fût de raccordement 15 intercalé entre le pied 11 et la tête 13.

Le diamètre intérieur de l'alésage de passage 14 est supérieur au diamètre du premier taraudage 12 de manière à laisser passer axialement de manière libre un élément fileté (non représenté) tel qu'une vis ou un boulon jusqu'à engagement dans les filets du premier taraudage 12.

Le fût de raccordement 15 délimite intérieurement un conduit 16 raccordant en alignement l'alésage de passage 14 et le premier taraudage axial 12. Le diamètre intérieur du conduit 16 est supérieur au diamètre du premier taraudage 12. Le conduit 16 et l'alésage 14 peuvent être formés d'un bloc. Le fût 15 est doté également d'une surface extérieure ayant une section avec un profil anti-rotation. Les premier et deuxième exemples des figures 1 et 2 se distinguent par la structure de la surface extérieure du fût de raccordement 15. La surface extérieure du fût de raccordement 15 de la figure 1 est constituée par un moletage 18 dont les stries sont dirigées axialement. Mais comme l'illustre la figure 2, le profil de la section (prise perpendiculairement par rapport à la direction axiale X) de la surface extérieure pourrait être de forme polygonale, par exemple hexagonale. De manière plus générale, toute section à profil anti-rotation peut être utilisée, le but étant de créer des arêtes venant s'ancrer dans l'intérieur du tube lors de l'opération ultérieure de sertissage.

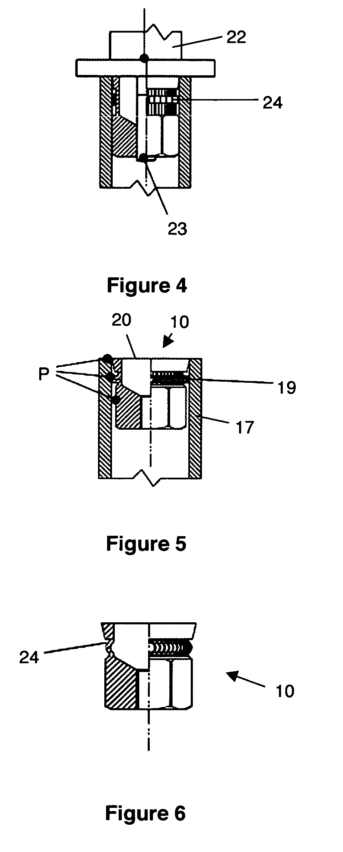

Le fût 15 est conçu pour avoir, sur au moins une partie de sa hauteur, une zone de plus grande déformabilité configurée pour se déformer sous un effort axial prédéterminé de traction appliqué au pied 11 par rapport à la tête 13 en direction de la tête (figure 4) jusqu'à générer un bourrelet de sertissage 19 ayant des dimensions extérieures supérieures au diamètre interne du tube 17 dans la zone de montage. Un tel bourrelet de sertissage 19 visible sur la figure 5 a pour effet de créer une déformation locale radiale et calibrée du tube dans la zone de montage, en direction de l'extérieur, conférant une tenue axiale élevée par ancrage local, pour cela la zone de plus grande déformabilité est calirée de manière idoine. Afin d'optimiser la génération du bourrelet de sertissage 19, la zone de plus grande déformabilité comporte un bourrelet intermédiaire 24 visible à la figure 6. Ce bourrelet intermédiaire 24 a des dimensions extérieures inférieures à celles du pied 11. De préférence, le bourrelet intermédiaire 24 a aussi des dimensions extérieures inférieures aux dimensions extérieures de la tête 13. Le bourrelet intermédiaire 24 permet de former une amorce qui sera utilisée pour former avec plus de facilité, lors du sertissage, le bourrelet de sertissage 19 (figure 5). Autrement dit, lors du sertissage, le bourrelet intermédiaire 24 sera soumis à une force le déformant jusqu'à former ledit bourrelet de sertissage 19.

De préférence, le bourrelet intermédiaire 24 forme une saillie de révolution au niveau de la zone de plus grande déformabilité. Le plus grand diamètre de ce bourrelet intermédiaire 24 est inférieur aux dimensions extérieures du pied 11. Ceci permet notamment l'insertion de l'insert par son pied 11 dans un tube 17, tout en laissant aussi pénétrer le bourrelet intermédiaire 24 dans ledit tube 17 (figure 3).

Sur l'exemple particulier des figures 1 et 2, la zone de plus grande déformabilité est formée par un renfoncement circulaire du fût sur sa surface extérieure alors que le diamètre du conduit 16 interne du fût au niveau de ladite zone de plus grande déformabilité reste, de préférence, sensiblement invariant. Une frappe à froid de l'insert des figure 1 et 2 pourra former le bourrelet intermédiaire 24 tel qu'illustré à la figure 6. La hauteur de la saillie formée sur le fond du renfoncement formant bourrelet intermédiaire 24 est alors, de préférence, inférieure à la profondeur du renfoncement.

La conception d'une telle zone de plus grande déformabilité correspond à un choix approprié de l'épaisseur du fût 15, des diamètres interne et externe du fût 15 sur sa hauteur vouée à se déformer, de la hauteur vouée à se déformer, et des choix de matières.

La zone de plus grande déformabilité s'entend d'une zone du fût présentant une aptitude supérieure à celle du pied 11, de la tête 13 ou du reste du fût 15, à se déformer sous un effort axial prédéterminé. Autrement dit, la zone de plus grande déformabilité se déforme sous l'effort prédéterminé avant que celui-ci n'ait provoqué de déformation du pied 11 ou de la tête 13. Une telle zone de plus grande déformabilité peut être obtenue par exemple par une réduction locale de l'épaisseur radiale de l'insert ou par des enlèvements locaux de matière.

La section à profil anti-rotation peut être quelconque, le but étant de créer des arêtes venant s'ancrer dans l'intérieur du tube lors de l'opération ultérieure de sertissage. De telles arêtes renforcent l'action anti-rotation par rapport à celle déjà due aux conditions de frottement entre le bourrelet de sertissage et le tube.

De préférence, le bourrelet intermédiaire 24 est formé au niveau de la section du fût à profil anti-rotation dans la zone de plus grande déformabilité. La zone de plus grande déformabilité et le profil anti-rotation peuvent alors être concommittantes. Ceci permet à une portion de la section à profil anti-rotation de se retrouver au sommet du bourrelet intermédiaire 24, et donc de prévoir, lors de la formation du bourrelet de sertissage 19, la mise en contact de ladite portion à profil anti-rotation avec la surface intérieure du tube pour empêcher, après sertissage, la rotation de l'insert par rapport au tube 17.

L'effort axial peut être appliqué au pied 11 par un appareil 22 conventionnel pour la pose des écrous à sertir en aveugle utilisant une tige de traction 23 vissée dans le taraudage 12 (figure 4).

Dans un mode de réalisation, la tête 13 présente une forme de cône convergeant en direction du pied 11 depuis une base 20 ayant des dimensions extérieures supérieures à celles du diamètre interne du tube dans la zone de montage. L'introduction de l'insert dans le tube avant sertissage correspond à une position de la tête 13 partiellement à l'extérieur du tube 17 (figure 3). La conicité facilite le centrage de l'insert 10 dans le tube 17. L'effort appliqué à la tête lors de l'opération de sertissage provoque la pénétration complète de la tête jusqu'à un affleurement de la base 20 du cône par rapport à l'extrémité du tube 17 (figure 5). Le choix de telles dimensions implique que la tête 13 forme un point d'ancrage après l'introduction axiale complète de l'insert dans le tube, même avant l'opération de sertissage.

Pour former un point d'ancrage complémentaire, le pied 11 peut présenter des dimensions extérieures sensiblement égales à celles du diamètre interne du tube 17 dans la zone de montage. Après l'introduction axiale complète de l'insert dans le tube, l'insert ne peut pas basculer. Le profil de la section de la surface extérieure du pied 11 peut être de forme polygonale ou circulaire. La forme polygonale présente l'avantage de réserver des dégagements entre les faces extérieures du pied et l'intérieur du tube pour recevoir les éventuels cordons de soudure des tubes.

Il en résulte que, par un choix adapté de leurs dimensions respectives, le pied 11, la tête 13 et le bourrelet de sertissage 19 peuvent ainsi former trois zones d'ancrage P distinctes échelonnées dans la direction axiale X le long du tube 17 dans la zone de montage.

De manière non limitative, un insert à filetage intérieur 10 peut être monté en aveugle en extrémité de tube en déformant au préalable la zone de plus grande déformabilité du fût 15 pour générer un bourrelet intermédiaire 24 ayant des dimensions extérieures inférieures à celle du pied 11. Cette déformation peut être réalisée lors de la fabrication de l'insert, par exemple par frappe à froid. L'insert obtenu après cette première opération est illustré à la figure 6. La création d'une pré-déformation 24 de l'insert avant le montage proprement dit dans l'extrémité de tube 17 permet de réduire l'effort nécessaire à la déformation du bourrelet. Puis le pied, le fût et la tête sont successivement introduits axialement (au moins partiellement pour la tête) dans une zone de montage en extrémité de tube. Enfin un effort axial prédéterminé, supérieur au premier, est appliqué au pied 11 par rapport à la tête 12, en direction de la tête. Ceci a pour effet de continuer la déformation de la zone de plus grande déformabilité et de générer un bourrelet de sertissage 17 ayant des dimensions extérieures supérieures au diamètre interne du tube 17 dans la zone de montage.

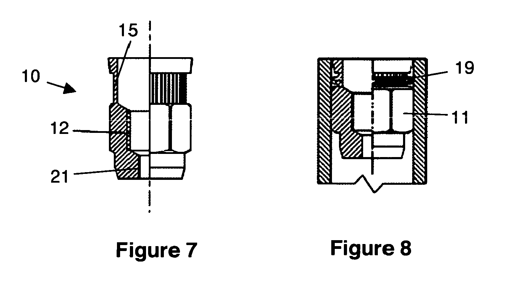

En référence au quatrième exemple de la figure 7 illustrant l'insert avant la formation du bourrelet intermédiaire, le pied 11 peut présenter un deuxième taraudage axial 21 ayant un diamètre inférieur à celui du premier taraudage 12, et disposé du côté opposé au fût de raccordement 15 par rapport au premier taraudage 12. Le pas des premier et deuxième taraudages 12, 21 peuvent être différents ou non. Dans une telle variante, le deuxième taraudage 21 remplit la fonction principale de l'insert relative à la fixation d'un élément fileté tel qu'une vis ou un boulon, tandis que le premier taraudage peut être dédié au transfert, par traction sur celui-ci, d'un effort suffisant pour provoquer la déformation locale et calibrée du tube par l'intermédiaire du bourrelet de sertissage 19 (figure 8).

## Revendications

1. Insert à filetage intérieur (10) pour montage en aveugle en extrémité de tube (17) **caractérisé en ce qu**'il comporte les éléments suivants décalés dans une direction axiale (X) :
- un pied (11) équipé intérieurement d'un premier taraudage axial (12),
- une tête (13) agencée coaxialement avec le taraudage (12) et le pied (11), délimitant intérieurement un alésage de passage (14) de diamètre intérieur supérieur au diamètre du premier taraudage (12),
- et un fût de raccordement (15) intercalé entre le pied (11) et la tête (13), doté d'une surface extérieure ayant une section avec un profil anti-rotation, et ayant une zone de plus grande déformabilité configurée pour se déformer sous un effort axial prédéterminé de traction appliqué au pied (11) par rapport à la tête (13) en direction de la tête (13) et générer un bourrelet de sertissage (19) ayant des dimensions extérieures supérieures au diamètre interne du tube (17) dans la zone de montage, ladite zone de plus grande déformabilité comportant un bourrelet intermédiaire (24) ayant des dimensions extérieures inférieures à celle du pied (11).

2. Insert selon la revendication 1, **caractérisé en ce que** la tête (13) a une forme de cône convergeant en direction du pied (11) depuis une base (20) ayant des dimensions extérieures supérieures à celles du diamètre interne du tube (17) dans la zone de montage.

3. Insert selon l'une des revendications 1 et 2, **caractérisé en ce que** le pied (11) présente des dimensions extérieures sensiblement égales à celles du diamètre interne du tube (17) dans la zone de montage.

4. Insert selon la revendication 3, **caractérisé en ce que** le profil de la section de la surface extérieure du pied (11) est de forme polygonale.

5. Insert selon l'une des revendications 1 à 4, **caractérisé en ce que** le pied (11) présente un deuxième taraudage axial (21) ayant un diamètre inférieur à celui du premier taraudage (12), et disposé du côté opposé au fût de raccordement (15).

6. Insert selon l'une des revendications 1 à 5, **caractérisé en ce que** la surface extérieure du fût de raccordement (15) est constituée par un moletage (18) dont les stries sont dirigées axialement.

7. Insert selon l'une des revendications 1 à 5, **caractérisé en ce que** le profil de la section de la surface extérieure du fût de raccordement (15) est de forme polygonale.

8. Insert selon l'une quelconque des revendications 1 à 7, **caractérisé en ce que** le sommet du bourrelet intermédiaire (24) comporte une portion de la section à profil anti-rotation.

9. Procédé de montage en aveugle d'un insert à taraudage intérieur (10) en extrémité de tube (17), ledit insert (10) comportant un pied (11) équipé intérieurement d'un premier taraudage axial (12), une tête (13) agencée coaxialement avec le taraudage (12) et le pied (11), délimitant intérieurement un alésage de passage (14) de diamètre intérieur supérieur au diamètre du taraudage (12), et un fût de raccordement (15) intercalé entre le pied (11) et la tête (13), procédé consistant à :
- déformer une zone de plus grande déformabilité du fût (15), générant un bourrelet intermédiaire (24) ayant des dimensions extérieures inférieures à celle du pied (11),
- introduire successivement le pied (11), le fût (15) et la tête (13) au moins partiellement dans une zone de montage en extrémité de tube (17),
- appliquer un effort axial prédéterminé au pied (11) par rapport à la tête (13) pour continuer la déformation de la zone de plus grande déformabilité et générer un bourrelet de sertissage (19) ayant des dimensions extérieures supérieures au diamètre interne du tube (17) dans la zone de montage.
